# EUROPÄISCHE PATENTSCHRIFT

(11) **EP 4 043 914 B1**
(45) Veröffentlichungstag und Bekanntmachung des Hinweises auf die Patenterteilung: **03.09.2025**
(21) Anmeldenummer: 21157230.0
(22) Anmeldetag: 15.02.2021
(51) Int. Cl.: G01S 7/481, G01S 17/89, B25J 9/16, G01B 11/00, G01C 15/00, G01S 17/42, G01S 17/66, G01S 17/87

(54) **SIX-DOF-MESSHILFSMITTEL**
SIX-DOF MEASURING AID
MOYEN AUXILIAIRE DE MESURE À SIX DEGRÉS DE LIBERTÉ (6DOF)

(43) Veröffentlichungstag der Anmeldung: 17.08.2022
(73) Patentinhaber: Leica Geosystems AG, 9435 Heerbrugg (CH)
(72) Erfinder: KWIATKOWSKI, Tomasz, 5054 Moosleerau (CH); MOSER, Daniel, 5707 Seengen (CH)
(74) Vertreter: Kaminski Harmann

(56) Entgegenhaltungen:
- DE-A1- 102018 110 852
- DE-B4- 112014 001 459
- US-A1- 2016 327 383
- US-A1- 2020 049 486

## Beschreibung

### -FACHGEBIET DER ERFINDUNG-

Die Erfindung betrifft ein six degrees of freedom (Six-DOF) Messhilfsmittel zur automatisch geführten Vermessung von Objekten.

### -HINTERGRUND-

In der Objektvermessungstechnik sind unterschiedliche Systeme bekannt, zur Bestimmung von 3D-Koordinaten von zu vermessenden Punkten einer Objektoberfläche. Ein Beispiel für ein solches System ist ein Lasertracker der mit einem vom Lasertracker trackbaren Messhilfsmittel zusammenwirkt. Messhilfsmittel zur Verwendung mit Lasertrackern zur Bestimmung von 3D-Koordinaten werden beispielsweise in der US 2016/0327383 A1 und in der DE 11 2014 001459 B4 beschrieben. Typischerweise wird von dem Lasertracker die Position und Orientierung des Messhilfsmittels in bis zu sechs Freiheitsgraden (Six-DOF) bestimmt und getrackt, wobei das Messhilfsmittel die zu vermessenden Punkte der Objektoberfläche taktil oder berührungslos vermisst. Die mittels des Messhilfsmittels erzeugten Messdaten und die vom Lasertracker bestimmte Position und Orientierung des Messhilfsmittels ermöglichen dann die Bestimmung von 3D-Koordinaten von zu vermessenden Punkten einer Objektoberfläche. Ein Beispiel für ein solches Messhilfsmittel ist ein optischer Scanner. Dieser nutzt optische Messstrahlung zur Abtastung zu vermessender Objektoberflächen. Mittels der Abtastung werden 3D-Koordinaten von einzelnen Punkten der Objektoberfläche - sogenannten Objektpunkten - bestimmt. Diese 3D-Koordinaten werden üblicherweise in Form von 3D-Punkten in einer Punktwolke abgespeichert. Die in einer solchen Punktwolke, beispielsweise 3D-Punktwolke, enthaltene Information kann beispielsweise im Rahmen einer Nach-Prozessierung zur Visualisierung des vermessenen Objekts oder auch zum Messwertabgleich mit Referenzwerten verwendet werden. Bei in Serie und hochautomatisiert produzierten Bauteilen kann eine hochpräzise und automatisierte Bauteilvermessung nützlich sein, um den Herstellungsprozess effizienter zu gestalten und auch die Qualität der produzierten Teile zu verbessern. Dazu kommen seit längerer Zeit und immer vermehrt auch automatisch geführte Vermessungssysteme zum Einsatz. Entscheidend bei der Nutzung solcher automatisch geführter Vermessungssysteme ist, dass die Systeme wartungsarm sind und möglichst unterbruchsfrei eingesetzt werden können.

Es ist deshalb eine Aufgabe der Erfindung ein verbessertes Six-DOF-Messhilfsmittel, das dazu dient 3D-Koordinaten von Objektpunkten in Form von 3D-Punkten einer Punktwolke zu ermitteln, bereitzustellen. Das Six-DOF-Messhilfsmittel kann dazu automatisch geführt verwendet werden, wobei das verbesserte Six-DOF-Messhilfsmittel eine effizientere Objekt-/Bauteilvermessung ermöglicht, welche wiederum dazu beiträgt die Effizienz beispielsweise eines dazugehörigen Bauteilherstellungsprozesses zu steigern.

### -BESCHREIBUNG DER ERFINDUNG-

Die Erfindung betrifft ein Six-DOF-Messhilfsmittel zur Verwendung in einem einen Lasertracker zur Positions- und Orientierungsbestimmung des Six-DOF-Messhilfsmittels aufweisenden System zur Bestimmung von 3D-Koordinaten einer Vielzahl zu vermessender Objektpunkte in Form von 3D-Punkten einer Punktwolke, mit einer Kopplungsvorrichtung zur Kopplung des Six-DOF-Messhilfsmittels an eine mittels Plattformsteuerung automatisch geführte Plattform, wobei die Plattform zur Ausführung sich wiederholender Messaufgaben entlang eines zumindest grob vordefinierten Pfades in einer Umgebung automatisch geführt wird, einer Umgebungssensorik zur Erzeugung von Umgebungsinformation, und einem Steuerungsmodul, das kommunikativ mit der Umgebungssensorik verbunden und mit der Plattformsteuerung verbindbar ist, wobei das Steuerungsmodul eine Plattformsteuerungsunterstützungsfunktionalität aufweist, im Rahmen derer das Steuerungsmodul dazu konfiguriert ist, in an eine automatisch geführte Plattform gekoppeltem Zustand die Umgebungssensorik bei der automatisch geführten Bewegung entlang des vordefinierten Pfades, anzuweisen in einem ersten Modus, Umgebungsinformation zur Bestimmung eines Umgebungsnormals, und in einem zweiten Modus, Umgebungsinformation zur Detektion von Anomalien zum Umgebungsnormal zu erzeugen, und die von der Umgebungssensorik erzeugte Umgebungsinformation zur Steuerungsunterstützung der Plattformsteuerung bereitzustellen.

Das Six-DOF-Messhilfsmittel kann dabei beispielsweise ein Messsensoraufbau wie ein mobil bewegter optischer Scanner sein, z.B. ein laserlichtbasierter Triangulationsscanner oder ein Weisslichtscanner. Das Six-DOF-Messhilfsmittel kann auch ein Messsensoraufbau wie ein stereo-kamerabasiertes Setup sein, welches beispielsweise basierend auf einem Prinzip der Photogrammetrie die Bestimmung von 3D-Koordinaten von Objektpunkten ermöglicht. Ebenso kann das Six-DOF-Messhilfsmittel ein Messhilfsmittel sein, welches ein Messsensoraufbau aufweist, bzw., an welches ein Messsensoraufbau wie ein mobil bewegter optischer Scanner, z.B. ein laserlichtbasierter Triangulationsscanner und/oder ein Weisslichtscanner und/oder ein stereo-kamerabasiertes Setup ankoppelbar sind. Gleichermassen können auch beispielsweise taktil messende Messsensoraufbauten an das Six-DOF-Messhilfsmittel angekoppelt werden. Das Six-DOF-Messhilfsmittel ermöglicht dabei die Bestimmung von dessen Position und Orientierung mittels eines Lasertrackers in bis zu sechs Freiheitsgraden.

Das Six-DOF-Messhilfsmittel, beispielsweise der mobil bewegte optische Scanner, wird typischerweise eingesetzt, um Objekte/Bauteile in einer vordefinierten, objektspezifisch gleichen Weise zu vermessen. Dabei werden bestimmte vordefinierte Objektpunkte eines Bauteils/Objekts oder vordefinierte Bereiche des Bauteils/Objekts, aufweisend eine Vielzahl von Objektpunkten, vermessen. Zu diesem Zwecke ist das Six-DOF-Messhilfsmittel an eine mittels einer Plattformsteuerung automatisch geführte Plattform gekoppelt und somit automatisch geführt zu den zu vermessenden Objektpunkten bzw. Bereichen hinbewegbar. Die Plattform führt dabei das angekoppelte Six-DOF-Messhilfsmittel automatisch entlang eines zumindest grob vordefinierten Pfades zu den zu vermessenden Objektpunkten bzw. Bereichen. Das an den Bestimmungsort bewegte Six-DOF-Messhilfsmittel tastet die zu vermessenden Objektpunkte ab, wobei basierend darauf die 3D-Koordinaten der Objektpunkte, beispielsweise im Zusammenwirken mit einem Lasertracker, bestimmbar sind. Die vermessenen 3D-Punkte bilden eine Punktwolke, die die 3D-Information der vermessenen Objektpunkte aufweist.

Ist das Six-DOF-Messhilfsmittel gemäss einer Ausführungsform ein optischer Scanner weist dieser ein optisches Abtastmodul auf, welches typischerweise zu vermessende Objektpunkte mittels Distanzmessstrahlung unter bestimmtem Winkel abtastet. Ein gängiges Distanzmessprinzip ist beispielsweise das Prinzip der Triangulation. Basierend auf der so ermittelten Distanz und Richtung zu einem Objektpunkt und der bestimmten Position und Orientierung des optischen Scanners sind die 3D-Koordinaten eines abgetasteten Objektpunkts, im Zusammenwirken mit einem Lasertracker, bestimmbar.

Die Kopplungsvorrichtung des Six-DOF-Messhilfsmittels kann dazu ausgelegt sein alternativ sowohl einen Haltegriff, der händisch von einem Benutzer haltbar ist und das Six-DOF-Messhilfsmittel manuell bewegbar macht, an das Six-DOF-Messhilfsmittel zu koppeln als auch das Six-DOF-Messhilfsmittel an eine mittels Plattformsteuerung automatisch geführte Plattform zu koppeln. In gekoppeltem Zustand ist das Six-DOF-Messhilfsmittel posenfest mit dem Haltegriff bzw. der Plattform verbunden. Die posenfeste Verbindung kann beispielsweise über korrespondierende formschlüssige Elemente, korrespondierende reibungsschlüssige Elemente oder eine Kombination davon - jeweils an der Kopplungsvorrichtung und dem Haltegriff bzw. der Plattform - bereitgestellt werden. Die Plattform wird von der Plattformsteuerung zwecks Ausführung von sich wiederholenden Messaufgaben/Objekt-/Bauteilvermessungsaufgaben entlang eines zumindest grob definierten Pfades in einer Umgebung automatisch geführt. Die Plattform kann dazu beispielsweise an einem Roboterarm angebracht sein. Der zumindest grob vordefinierte Pfad ist dabei so gelegt, dass die zu vermessenden Objektpunkte bzw. Bereiche von der Plattform so angefahren werden, dass diese mittels des Six-DOF-Messhilfsmittels vermessen werden können.

Eine Verbesserung der Effizienz bei der objektspezifisch gleichartigen Vermessung von Objekten bzw. Bauteilen wird erfindungsgemäss nun dadurch erreicht, dass das automatisch geführte Hinbewegen des Six-DOF-Messhilfsmittels zu den zu vermessenden Objektpunkten bzw. Bereichen basierend auf von einer Umgebungssensorik des Six-DOF-Messhilfsmittels erzeugter Umgebungsinformation im Zuge des Hinbewegens fortlaufend automatisch kontrollierbar ist.

Die Umgebungssensorik ist dazu ausgelegt Umgebungsinformation zur Charakterisierung der Umgebung in welcher sich das Six-DOF-Messhilfsmittel bewegt zu erzeugen. Die Umgebungssensorik kann dazu eine Vielzahl von Sensorelementen und auch eine Vielzahl von unterschiedlichen Sensorelementen, bzw. Sensorelementtypen, aufweisen. Dabei ist die Art von Umgebungsinformation, welche erzeugt wird, durch das jeweilige Sensorelement bestimmt. So kann die Umgebungssensorik beispielsweise berührungslos messende Näherungssensoren aufweisen, die eine Annäherung eines Objekts in der Umgebung in welcher sich das Six-DOF-Messhilfsmittel bewegt an das Six-DOF-Messhilfsmittel näher als ein bestimmter Schwellenwert als Umgebungsinformation erzeugen. Auch kann die Umgebungssensorik Berührungssensoren aufweisen, welche eine mechanische Berührung eines Objekts/Hindernisses mit dem Six-DOF-Messhilfsmittel als Umgebungsinformation erzeugen. Die Umgebungssensorik weist berührungslos messende Abstandssensoren auf, die Abstandsinformationen zu Abständen des Six-DOF-Messhilfsmittels zu Oberflächen in der Umgebung in der sich der optische Scanner bewegt als Umgebungsinformation erzeugen. Die Umgebungssensorik kann auch einen oder mehrere Kamerasensoren aufweisen, die Bilddaten zu der Umgebung in der sich das Six-DOF-Messhilfsmittel bewegt als Umgebungsinformation erzeugen. Ebenso kann die Umgebungssensorik Beschleunigungssensoren aufweisen, die Beschleunigungsinformation zur Bewegung des Six-DOF-Messhilfsmittels in der Umgebung als Umgebungsinformation erzeugen. Die Umgebungssensorik kann auch Temperatursensoren aufweisen, die Temperaturinformation zur Umgebungstemperatur als Umgebungsinformation erzeugen.

Mit der Umgebungssensorik kommunikativ verbunden ist ein Steuerungsmodul des Six-DOF-Messhilfsmittels, welches auch mit der Plattformsteuerung kommunikativ verbindbar ist. D.h. das Steuerungsmodul ist kommunikativ mit den Sensorelementen der Umgebungssensorik verbunden, und mit der Plattformsteuerung kommunikativ verbindbar, wobei über die kommunikative Verbindung Anweisungen/Daten/Signale übertragen werden können.

Die mittels Plattformsteuerung automatisch geführte Bewegung des Six-DOF-Messhilfsmittels entlang eines zumindest grob vordefinierten Pfades wird im Zuge der automatischen Führung dadurch fortlaufend kontrollierbar, dass das Steuerungsmodul erfindungsgemäss eine Plattformsteuerungsunterstützungsfunktionalität aufweist. Ist das Six-DOF-Messhilfsmittel an die automatisch geführte Plattform gekoppelt, dann ist das Steuerungsmodul im Rahmen der Plattformsteuerungsunterstützungsfunktionalität dazu konfiguriert die Umgebungssensorik bei der automatisch geführten Bewegung des Six-DOF-Messhilfsmittels entlang des zumindest grob vordefinierten Pfades in einem ersten und einem zweiten Modus anzuweisen Umgebungsinformation zu erzeugen. Dabei weist das Steuerungsmodul die Umgebungssensorik im ersten Modus dazu an Umgebungsinformation zu erzeugen, welche die Umgebung in welcher sich das Six-DOF-Messhilfsmittel bewegt so charakterisiert, dass diese Umgebungsinformation zur Bestimmung einer Referenzumgebung, d.h. eines Umgebungsnormals verwendbar ist. Dieser erste Modus wird vorteilhafterweise dann verwendet, wenn die automatische Führung der Plattform im Rahmen eines "Teaching"-Vorgangs erfolgt. Ein solcher "Teaching"-Vorgang stellt typischerweise eine objektspezifisch gleich ablaufende Messaufgabe unter Ideal- bzw. Referenz- bzw. Normal- bzw. Normbedingungen dar. Im zweiten Modus weist das Steuerungsmodul die Umgebungssensorik dazu an Umgebungsinformation zu erzeugen, welche die Umgebung in welcher sich das Six-DOF-Messhilfsmittel bewegt so charakterisiert, dass diese Umgebungsinformation zur Detektion von Anomalien zum im ersten Modus erzeugten Umgebungsnormal verwendbar ist. Im Rahmen der Plattformsteuerungsunterstützungsfunktionalität ist das Steuerungsmodul auch dazu konfiguriert die in dem ersten bzw. zweiten Modus erzeugte Umgebungsinformation bereitzustellen zur Steuerungsunterstützung der Plattformsteuerung. Die Bereitstellung der erzeugten Umgebungsinformation kann dabei über eine kommunikative Verbindung zu der Plattformsteuerung erfolgen. Dabei kann eine kommunikative Verbindung zu der Plattformsteuerung beispielsweise direkt aber auch über weitere Recheneinheiten bereitgestellt werden. Die kommunikative Verbindung kann dabei kabelbasiert oder auch kabellos erfolgen. Im Rahmen der Plattformsteuerungsunterstützungsfunktionalität weist das Steuerungsmodul somit die Umgebungssensorik dazu an Umgebungsinformation modusspezifisch zu erzeugen und stellt die so erzeugte Umgebungsinformation bereit, sodass diese Umgebungsinformation von der Plattformsteuerung unterstützend verwendet werden kann um die automatische Führung der Plattform zu kontrollieren/anzupassen.

Umgebungsinformation die im ersten Modus erzeugt wird, wird verwendet um eine Referenzumgebung d.h. ein Umgebungsnormal zu bestimmen bzw. zu definieren. Damit die so erzeugte Umgebungsinformation dazu verwendet werden kann wird diese typischerweise unter Ideal- bzw. Referenz- bzw. Normal- bzw. Normbedingungen erzeugt. Solche Ideal- bzw. Referenz- bzw. Normal- bzw. Normbedingungen werden typischerweise in einem "Teaching"-Vorgang abgebildet. Ein solcher "Teaching"-Vorgang sieht typischerweise vor, dass ein Objekt/Bauteil unter Normbedingungen vermessen wird. D.h. das genormte Objekt/Bauteil wird in einer genormten Umgebung nach Normbedingungen bereitgestellt. Dann erfolgt eine Vermessung des Objekts/Bauteils indem die Plattform mit gekoppeltem Six-DOF-Messhilfsmittel automatisch dem Objekt/Bauteil entlanggeführt wird, sodass das Six-DOF-Messhilfsmittel die zu vermessenden Objektpunkte bzw. Bereiche des Objekts/Bauteils vermessen kann. Im Zuge dessen ist dann Umgebungsinformation zur Umgebung in welcher sich das Six-DOF-Messhilfsmittel bewegt durch die Umgebungssensorik im ersten Modus erzeugbar, welche für die Bestimmung des Umgebungsnormals verwendet werden kann. Basierend auf vorbestimmten Kriterien betreffend den Informationsgehalt des Umgebungsnormals, beispielsweise Auflösung oder Anzahl Sensorwerte über welche gemittelt eine Umgebungsinformation erzeugt wird, wird die Umgebungssensorik im ersten Modus von dem Steuerungsmodul angewiesen Umgebungsinformation zu erzeugen. Dies kann beispielsweise über eine bestimmte Frequenzvorgabe mit der Umgebungsinformation erzeugt wird erfolgen. Diese Frequenzvorgabe kann beispielsweise basierend auf der Geschwindigkeit mit der das Six-DOF-Messhilfsmittel im "Teaching"-Vorgang geführt wird automatisch ermittelt werden. Das Umgebungsnormal, das basierend auf so erzeugter Umgebungsinformation bestimmt wird dient als Referenz für Umgebungsinformation, welche im zweiten Modus, d.h. bei der Vermessung des Objekts/Bauteils unter Realbedingungen, welche von den Normbedingungen abweichen können, erzeugt wird.

Umgebungsinformation die im zweiten Modus erzeugt wird, wird verwendet um Anomalien zum Umgebungsnormal zu detektieren. Im Unterschied zur Umgebungsinformation, welche im ersten Modus erzeugt wird, wird Umgebungsinformation im zweiten Modus typischerweise im Zuge einer Vermessung eines Objekts/Bauteils unter Realbedingungen erzeugt. Typischerweise unterscheidet sich die Art, beispielsweise die Dynamik, der automatischen Führung des Six-DOF-Messhilfsmittels bei der Vermessung des Objekts/Bauteils unter Realbedingungen von derjenigen unter Normbedingungen. Basierend auf weiteren vorbestimmten Kriterien betreffend den Informationsgehalt der im zweiten Modus erzeugten Umgebungsinformation wird die Umgebungssensorik im zweiten Modus von dem Steuerungsmodul angewiesen Umgebungsinformation zu erzeugen. Dies kann wiederum beispielsweise über eine weitere bestimmte Frequenzvorgabe mit der Umgebungsinformation erzeugt wird erfolgen. Diese Frequenzvorgabe kann beispielsweise basierend auf der Geschwindigkeit mit der das Six-DOF-Messhilfsmittel unter Realbedingungen bewegt wird automatisch ermittelt werden. Im zweiten Modus erzeugte Umgebungsinformation dient der Detektion von Anomalien in der Umgebungsinformation zum Umgebungsnormal.

Das Steuerungsmodul ist im Rahmen der Plattformsteuerungsunterstützungsfunktionalität dazu konfiguriert im ersten und im zweiten Modus erzeugte Umgebungsinformation bereitzustellen, sodass
∘ diese Umgebungsinformation dazu verwendet werden kann
   i. ein Umgebungsnormal zu bestimmen/definieren,
   ii. eine Anomalie zu dem Umgebungsnormal zu detektieren, und
∘ diese Umgebungsinformation von der Plattformsteuerung steuerungsunterstützend verwendet werden kann.

Beispielsweise kann die Plattformsteuerung die Umgebungsinformation dahingehend steuerungsunterstützend verwenden, dass basierend auf der Detektion einer Anomalie die automatische Führung des Six-DOF-Messhilfsmittels angepasst bzw. unterbrochen wird. Das Steuerungsmodul mit der Plattformsteuerungsunterstützungsfunktionalität ermöglicht eine fortlaufende Kontrolle der automatischen Führung des Six-DOF-Messhilfsmittels im Zuge der Durchführung einer objekt-/bauteilspezifischen Vermessungsaufgabe. Die Kontrolle der automatischen Führung basiert dabei auf der fortlaufenden Detektion von Anomalien in der Umgebung zu einem Umgebungsnormal. Eine Anomalie kann beispielsweise dann detektiert werden, wenn eine Umgebungsinformation, die im zweiten Modus erzeugt wurde nicht zur entsprechenden Umgebungsinformation des Umgebungsnormals passt, d.h. dass die im zweiten Modus erzeugte Umgebungsinformation bis auf bestimmte Abweichungen nicht mit der entsprechenden Umgebungsinformation des Umgebungsnormals übereinstimmt.

Solche Anomalien können beispielsweise durch ein vorhandenes Hindernis, eine Wärmequelle/-senke oder auch durch eine abnorme Bewegung des Six-DOF-Messhilfsmittels erzeugt werden.

Die so ermöglichte fortlaufende Kontrolle der automatischen Führung des Six-DOF-Messhilfsmittels gestaltet objekt-/bauteilspezifische Vermessungsaufgaben effizienter, da beispielsweise Abnormitäten in der Umgebung in der das Six-DOF-Messhilfsmittel geführt wird detektiert werden und dadurch beispielsweise Kollisionen verhindert werden können. Dadurch kann die automatisch geführte Verwendung des Six-DOF-Messhilfsmittels unterbruchsfreier und konstenschonender erfolgen.

Die Umgebungssensorik weist mehrere berührungslos messende Abstandssensoren auf, wobei jeder Abstandssensor ein bestimmtes Sensorsichtfeld hat. Die Abstandssensoren sind am Six-DOF-Messhilfsmittel so angeordnet, dass sich die Sensorsichtfelder der Abstandssensoren zu einem das Six-DOF-Messhilfsmittel umgebenden Umgebungssensorsichtfeld ergänzen. Die Abstandssensoren sind im Rahmen der Plattformsteuerungsunterstützungsfunktionalität dazu konfiguriert Abstandsinformation zu Abständen zu Oberflächen Plattformsteuerungsunterstützungsfunktionalität dazu konfiguriert Abstandsinformation zu Abständen zu Oberflächen innerhalb des Umgebungssensorsichtfelds als Umgebungsinformation zu erzeugen.

Ein berührungslos messender Abstandssensor hat dabei typischerweise ein trichterförmiges Sensorsichtfeld und erzeugt Abstandsinformation basierend darauf ein Abstand vom Six-DOF-Messhilfsmittel zu einer Oberfläche im Sensorsichtfeld ermittelt werden kann. Die berührungslos messenden Abstandssensoren als Teil der Umgebungssensorik ermöglichen eine Charakterisierung der Umgebung des Six-DOF-Messhilfsmittels dahingehend, dass fortlaufend während der automatischen Führung des Six-DOF-Messhilfsmittels Abstände des Six-DOF-Messhilfsmittels zu Oberflächen im Umgebungssensorsichtfeld ermittelt werden können. Solche Abstände können im Rahmen der Plattformsteuerungsunterstützungsfunktionalität dazu verwendet werden, um Anomalien zu detektieren, beispielsweise durch einen Abgleich der Abstände des Umgebungsnormals mit den jeweils fortlaufend während der automatischen Führung des Six-DOF-Messhilfsmittels unter Realbedingungen ermittelten Abständen.

Gemäss einer Ausführungsform des Six-DOF-Messhilfsmittels ist das Steuerungsmodul im Rahmen der Plattformsteuerungsunterstützungsfunktionalität dazu konfiguriert, nach Erzeugung einer Abstandsinformation zu einem Abstand der einen ersten Schwellenwert unterschreitet die Plattformsteuerung anzuweisen die Führung der Plattform zu verlangsamen, und der einen zweiten Schwellenwert, der kleiner als der erste Schwellenwert ist, unterschreitet die Plattformsteuerung anzuweisen die Führung der Plattform zu unterbrechen. Beispielsweise kann so bei Unterschreitung eines innerhalb des Umgebungssensorsichtfelds als Umgebungsinformation zu erzeugen.

Ein berührungslos messender Abstandssensor hat dabei typischerweise ein trichterförmiges Sensorsichtfeld und erzeugt Abstandsinformation basierend darauf ein Abstand vom Six-DOF-Messhilfsmittel zu einer Oberfläche im Sensorsichtfeld ermittelt werden kann. Die berührungslos messenden Abstandssensoren als Teil der Umgebungssensorik ermöglichen eine Charakterisierung der Umgebung des Six-DOF-Messhilfsmittels dahingehend, dass fortlaufend während der automatischen Führung des Six-DOF-Messhilfsmittels Abstände des Six-DOF-Messhilfsmittels zu Oberflächen im Umgebungssensorsichtfeld ermittelt werden können. Solche Abstände können im Rahmen der Plattformsteuerungsunterstützungsfunktionalität dazu verwendet werden, um Anomalien zu detektieren, beispielsweise durch einen Abgleich der Abstände des Umgebungsnormals mit den jeweils fortlaufend während der automatischen Führung des Six-DOF-Messhilfsmittels unter Realbedingungen ermittelten Abständen.

Das Steuerungsmodul ist im Rahmen der Plattformsteuerungsunterstützungsfunktionalität dazu konfiguriert, nach Erzeugung einer Abstandsinformation zu einem Abstand der einen ersten Schwellenwert unterschreitet die Plattformsteuerung anzuweisen die Führung der Plattform zu verlangsamen, und der einen zweiten Schwellenwert, der kleiner als der erste Schwellenwert ist, unterschreitet die Plattformsteuerung anzuweisen die Führung der Plattform zu unterbrechen. Beispielsweise kann so bei Unterschreitung eines definierte Schwellenwert die Plattformsteuerung anzuweisen die Führung der Plattform zu unterbrechen.

Dabei können berührungslos messende Sensorelemente, Sensorelemente sein aus des Gruppe von Sensorelementen aufweisend: kapazitive Sensorelemente, induktive Sensorelemente, time-of-flight-basierte Sensorelemente, ultraschall-basierte Sensorelemente, radar-basierte Sensorelemente, kamera-basierte Sensorelemente usw.

Dadurch wird ermöglicht, dass das Steuerungsmodul auch unabhängig von einer Detektion einer Anomalie die Plattformsteuerung direkt anweisen kann die automatische Führung des Six-DOF-Messhilfsmittels zu unterbrechen im Falle, dass ein Hindernis näher an die Sensorhaut herankommt als ein vordefinierter Schwellenwert. Dies stellt einen alternativen zusätzlichen Mechanismus zur Verhinderung von Kollisionen mit Hindernissen bereit und kann auch als alternativer redundanter Mechanismus zur Anomaliedetektion verwendet werden. Auch die Sensorhaut kann die Annäherung eines Hindernisses mit mehreren Schwellenwerten prüfen, wobei in Abhängigkeit des jeweils unterschrittenen Schwellenwerts die Plattformsteuerung entsprechend angewiesen wird die Führung des Six-DOF-Messhilfsmittels anzupassen, beispielsweise zu verlangsamen oder zu unterbrechen. Analog kann das Steuerungsmodul im Rahmen der Plattformsteuerungsunterstützungsfunktionalität auch dazu konfiguriert sein nach vorgängig erfolgter Annäherung eines Hindernisses an die Sensorhaut näher als ein Schwellenwert, die Plattformsteuerung anzuweisen die Führung der Plattform wiederaufzunehmen und/oder zu beschleunigen, sobald keine solche Annäherung eines Hindernisses mehr erkannt wird.

Gemäss einer weiteren Ausführungsform wird das Six-DOF-Messhilfsmittel von einem steifen Sensorgehäuse, als Teil der Umgebungssensorik, zumindest teilweise eingefasst, wobei das Sensorgehäuse eine mechanische Berührung des Sensorgehäuses erkennt. Dabei ist das Steuerungsmodul im Rahmen der Plattformsteuerungsunterstützungsfunktionalität dazu konfiguriert, bei Erkennung einer Berührung mittels des Sensorgehäuses die Plattformsteuerung anzuweisen die Führung der Plattform zu unterbrechen.

Dadurch wird ermöglicht, dass das Steuerungsmodul auch unabhängig von einer Detektion einer Anomalie die Plattformsteuerung direkt anweisen kann die automatische Führung des Six-DOF-Messhilfsmittels zu unterbrechen, beispielsweise mittels Not-Stopps, im Falle, dass eine mechanische Berührung des Sensorgehäuses erkannt wird. Dies stellt einen alternativen zusätzlichen Mechanismus zur Verhinderung von Kollisionen mit Hindernissen bereit und kann auch als alternativer redundanter Mechanismus zur Anomaliedetektion verwendet werden.

Gemäss einer Ausführungsform weist die Umgebungssensorik mindestens einen Kamerasensor auf. Der mindestens eine Kamerasensor ist im Rahmen der Plattformsteuerungsunterstützungsfunktionalität dazu konfiguriert, Bilddaten zur Umgebung des Six-DOF-Messhilfsmittels als Umgebungsinformation zu erzeugen.

Typischerweise ist der Kamerasensor Teil eines Kameramoduls mit entsprechender Kameraoptik. Das Kameramodul weist ein bestimmtes Kamerasichtfeld auf, wobei der Teil der Umgebung des Six-DOF-Messhilfsmittels der vom Kamerasichtfeld erfasst wird mittels des Kameramoduls in Form von Bilddaten elektronisch erfasst werden kann. Idealerweise weist die Umgebungssensorik mehrere Kameramodule auf die so am Six-DOF-Messhilfsmittel angeordnet sind, dass sich die Kamerasichtfelder zu einem das Six-DOF-Messhilfsmittel umgebenden Umgebungskamerasichtfeld ergänzen. Im Rahmen der Plattformsteuerungsunterstützungsfunktionalität ist der Kamerasensor bzw. sind die Kameramodule dazu konfiguriert Bilddaten der Umgebung in welcher das Six-DOF-Messhilfsmittel geführt wird und welche von dem Kamerasichtfeld bzw. Umgebungskamerasichtfeld erfasst wird als Umgebungsinformation zu erzeugen. Die so erzeugten Bilddaten können von dem Steuerungsmodul bereitgestellt werden, beispielsweise zur Bestimmung eines elektronischen Umgebungsabbildes der physischen Umgebung in welcher das Six-DOF-Messhilfsmittel automatisch geführt wird. Beispielsweise kann dadurch basierend auf im ersten Modus erzeugter Bilddaten ein elektronisches Referenzabbild der Umgebung als Umgebungsnormal oder Teil des Umgebungsnormals erzeugt werden. Bilddaten, welche im zweiten Modus erzeugt werden, können dann beispielsweise mittels Bildauswertealgorithmen mit dem Referenzabbild abgeglichen werden, basierend darauf dann Anomalien detektierbar sind. Die so mittels Kamerasensor bzw. Kameramodul erzeugte Umgebungsinformation wird dann von dem Steuerungsmodul im Rahmen der Plattformsteuerungsunterstützungsfunktionalität bereitgestellt zur Steuerungsunterstützung der Plattformsteuerung. Beispielsweise kann die Plattformsteuerung basierend darauf die automatische Führung des Six-DOF-Messhilfsmittels anpassen.

Gemäss einer Ausführungsform weist die Umgebungssensorik mindestens einen Beschleunigungssensor auf. Der mindestens eine Beschleunigungssensor ist im Rahmen der Plattformsteuerungsunterstützungsfunktionalität, dazu konfiguriert Beschleunigungsinformation zur Bewegung des Six-DOF-Messhilfsmittels in der Umgebung als Umgebungsinformation zu erzeugen.

Typischerweise ist der Beschleunigungssensor Teil einer inertialen Messeinheit und einer von mehreren Beschleunigungssensoren. Die von dem mindestens einen Beschleunigungssensor als Umgebungsinformation erzeugte Beschleunigungsinformation kann von dem Steuerungsmodul bereitgestellt werden, beispielsweise zur Bestimmung von Bewegungstrajektorien des Six-DOF-Messhilfsmittels bei der automatischen Führung, wobei die Bewegungstrajektorien Information zur Position und/oder Orientierung des Six-DOF-Messhilfsmittels aufweisen kann. Beispielsweise kann dadurch basierend auf im ersten Modus erzeugter Beschleunigungsinformation eine Referenzbewegungstrajektorie als Umgebungsnormal oder Teil des Umgebungsnormals bestimmt/erzeugt werden. D.h. die geführte Bewegung des Six-DOF-Messhilfsmittels folgt unter Normbedingungen dieser Referenzbewegungstrajektorie. Beschleunigungsinformation, welche im zweiten Modus erzeugt wird kann dann mit der Referenzbewegungstrajektorie abgeglichen werden, basierend darauf dann Anomalien detektierbar sind. Die so mittels Beschleunigungssensor erzeugte Umgebungsinformation wird dann von dem Steuerungsmodul im Rahmen der Plattformsteuerungsunterstützungsfunktionalität bereitgestellt zur Steuerungsunterstützung der Plattformsteuerung. Beispielsweise kann die Plattformsteuerung basierend darauf die automatische Führung des Six-DOF-Messhilfsmittels anpassen.

Die von dem mindestens einen Beschleunigungssensor als Umgebungsinformation erzeugte Beschleunigungsinformation kann von dem Steuerungsmodul bereitgestellt werden, um basierend darauf die Richtung in welche sich das Six-DOF-Messhilfsmittel bewegen wird zu ermitteln, beispielsweise mittels eines Kalman-Filters. Basierend auf der so ermittelten Richtung kann dann die Umgebungssensorik dazu angewiesen werden Umgebungsinformation nur von der Umgebung die in Richtung der Bewegung liegt, zu erzeugen.

Gemäss einer Ausführungsform weist die Umgebungssensorik mindestens einen Temperatursensor auf. Dabei ist der mindestens eine Temperatursensor, im Rahmen der Plattformsteuerungsunterstützungsfunktionalität, dazu konfiguriert Temperaturinformation zur Umgebungstemperatur des Six-DOF-Messhilfsmittels als Umgebungsinformation zu erzeugen.

Die von dem mindestens einen Temperatursensor als Umgebungsinformation erzeugte Temperaturinformation kann von dem Steuerungsmodul bereitgestellt werden, beispielsweise zur Bestimmung der Umgebungstemperatur der Umgebung in welcher das Six-DOF-Messhilfsmittel automatisch geführt wird. Beispielsweise kann dadurch basierend auf im ersten Modus, erzeugter Temperaturinformation ein Referenzwärmebild als Umgebungsnormal oder Teil des Umgebungsnormals bestimmt/erzeugt werden. D.h. die geführte Bewegung des Six-DOF-Messhilfsmittels folgt unter Normbedingungen in einer im Referenzwärmebild ausgewiesenen Temperaturumgebung. Temperaturinformation, welche im zweiten Modus erzeugt wird kann dann mit dem Referenzwärmebild abgeglichen werden, basierend darauf dann Anomalien detektierbar sind. Die so mittels Temperatursensor erzeugte Umgebungsinformation wird dann von dem Steuerungsmodul im Rahmen der Plattformsteuerungsunterstützungsfunktionalität bereitgestellt zur Steuerungsunterstützung der Plattformsteuerung. Beispielsweise kann die Plattformsteuerung basierend darauf die automatische Führung des Six-DOF-Messhilfsmittels anpassen.

Die Umgebungssensorik kann auch weitere Sensorelemente aufweisen wie beispielsweise einen barometrischen Sensor zur absoluten Höhenbestimmung, GPS Sensoren zur absoluten Positionsbestimmung usw.

Gemäss einer Ausführungsform unterscheidet sich die Erzeugung der Umgebungsinformation im ersten Modus zumindest in der Rate der Umgebungsinformationserzeugung von derjenigen im zweiten Modus.

Die Erzeugung von Umgebungsinformation im ersten Modus erfolgt typischerweise im Rahmen eines "Teaching"-Vorgangs unter Normbedingungen. Dabei wird im ersten Modus erzeugte Umgebungsinformation vom Steuerungsmodul bereitgestellt um ein Umgebungsnormal zu bestimmen. Typischerweise hat das zu bestimmende Umgebungsnormal bestimmte Kriterien zu erfüllen. Diese Kriterien können beispielsweise eine örtliche Auflösung der Umgebungsinformation, eine Signifikanz der erzeugten Umgebungsinformation usw. betreffen. Basierend auf diesen bestimmten Kriterien kann dann das Steuerungsmodul die Umgebungssensorik anweisen, Umgebungsinformation kriterienspezifisch zu erzeugen. Beispielsweise kann basierend auf einer geforderten örtlichen Auflösung der Umgebungsinformation des Umgebungsnormals, eine Frequenz/Rate mit der die Umgebungsinformation erzeugt werden soll in Abhängigkeit von der Geschwindigkeit mit der der Scanner geführt wird ermittelt werden. Dann weist das Steuerungsmodul die Umgebungssensorik dazu an im ersten Modus Umgebungsinformation mit der so bestimmten Frequenz zu erzeugen. In Analogie zu den Kriterien betreffend das Umgebungsnormal können Kriterien an die Detektion von Anomalien gestellt werden. Diese Kriterien wiederum bestimmen die Anweisung des Steuerungsmoduls an die Umgebungssensorik Umgebungsinformation im zweiten Modus zu erzeugen. Beispielsweise können für die Anomaliedetektion andere Kriterien bezüglich örtliche Auflösung, oder Signifikanz der dazu zu erzeugenden Umgebungsinformation bestimmt sein. Dadurch können sich dann beispielsweise andere Frequenzen/Raten ergeben mit denen die Umgebungsinformation im zweiten Modus erzeugt wird.

Gemäss einer Ausführungsform weist das Six-DOF-Messhilfsmittel visuelle Markierungen, die in definierter räumlicher Beziehung ein Muster bildend am Six-DOF-Messhilfsmittel in einem Markierungsbereich angeordnet sind und für einen Lasertracker die Orientierung des Six-DOF-Messhilfsmittels bestimmbar machen, und einen Reflektor, der den visuellen Markierungen zugeordnet ist und die Position des Six-DOF-Messhilfsmittels für einen Lasertracker bestimmbar macht, auf.

Die visuellen Markierungen sind in definierter und fixer räumlicher Beziehung zueinander am Six-DOF-Messhilfsmittel angeordnet und formen dadurch ein spezifisches Muster, welches dazu dient, die Orientierung des Six-DOF-Messhilfsmittels für einen Lasertracker bestimmbar zu machen. Beispielsweise kann ein solcher Lasertracker eine Bilderfassungseinheit aufweisen, welche dazu konfiguriert ist von visuellen Markierungen gebildete Muster auf eine Ebene zu projizieren bzw. abzubilden. Mittels einer Bildauswertefunktionalität kann basierend darauf ein orientierungsspezifisches Muster identifiziert werden bzw. eine Änderung des Musters einer Orientierungsänderung des Six-DOF-Messhilfsmittels zugeordnet werden.

Der den visuellen Markierungen zugeordnete Reflektor ist typischerweise dazu ausgelegt auf ihn einfallende Strahlung in Richtung Strahlquelle zu reflektieren. Vom Reflektor reflektierte Strahlung macht die Position des Six-DOF-Messhilfsmittels für einen Lasertracker bestimmbar. Beispielsweise kann der Reflektor mit Laserstrahlung eines Lasertrackers angestrahlt werden, welche dann von dem Reflektor in Richtung Lasertracker reflektiert wird. Basierend auf der Detektion der reflektierten Laserstrahlung kann der Lasertracker die genauen Winkel unter welchen der Reflektor angestrahlt wird bestimmen. Basierend auf vom Reflektor reflektierter Laserstrahlung kann ebenfalls die Distanz zum Reflektor für einen Lasertracker bestimmbar sein. Basierend auf der Winkelinformation betreffend die Richtung der ausgestrahlten Laserstrahlung und der bestimmten Distanz zum Reflektor ist die Position des Reflektors und somit des Six-DOF-Messhilfsmittels für den Lasertracker bestimmbar.

Gemäss einer Ausführungsform sind die visuellen Markierungen Lichtpunkte und der Reflektor ist ein Retroreflektor.

Gemäss einer Ausführungsform ist das Steuerungsmodul dazu konfiguriert, die Umgebungssensorik bei der automatisch geführten Bewegung entlang des vordefinierten Pfades anzuweisen in einem dritten Modus, Umgebungsinformation zur Einhaltung eines definierten Abstandes zu einem Objekt mit zu vermessenden Objektpunkten zu erzeugen.

Dies ermöglicht, dass der Pfad, nur grob vordefiniert sein muss und während der automatisch geführten Bewegung entlang dieses grob vordefinierten Pfades die automatische geführte Bewegung basierend auf der erzeugten Umgebungsinformation so angepasst werden kann, dass das Six-DOF-Messhilfsmittel während der automatischen Führung fortwährend einen definierten Abstand zu dem zu vermessenden Objekt bzw. zu der zu vermessenden Oberfläche hat. Dieser definierte Abstand kann - im Falle, dass das Six-DOF-Messhilfsmittel beispielsweise ein mobil bewegter optischer Scanner ist - einem, vom Typ des Scanners vorgegebenem, optimalen Abstand zur Vermessung von Oberflächen entsprechen.

Gemäss einer Ausführungsform ist das Six-DOF-Messhilfsmittel ein mobil bewegter optischer Scanner zur Bestimmung von 3D-Koordinaten einer Vielzahl zu vermessender Objektpunkte in Form von 3D-Punkten einer Punktwolke im Zusammenwirken mit einem Lasertracker, mit einem optischen Abtastmodul zur optische Strahlung basierten Abtastung von Objektpunkten basierend darauf die Bestimmung von 3D-Punkten erfolgt.

Gemäss einer Ausführungsform weist die Umgebungssensorik eine Lese-Sensorik auf die im Rahmen der Plattformsteuerungsunterstützungsfunktionalität, dazu konfiguriert ist eine Identifikationsmarke und/oder ein Identifikationsmuster in der Umgebung des Six-DOF-Messhilfsmittels zu erkennen und der Identifikationsmarke und/oder dem Identifikationsmuster zugeordnete Identifikationsinformation als Umgebungsinformation zu erzeugen.

Die Lese-Sensorik kann beispielsweise die Funktionalität eines auf der "Near-Field-Communication" (NFC) Technologie basierenden NFC-Lesegeräts bereitstellen. Dadurch kann eine NFC basierte Identifikationsmarke, welche beispielsweise an einem zu vermessenden Objekt angebracht oder diesem zugeordnet ist, erkannt und die damit verknüpfte Identifikationsinformation als Umgebungsinformation erzeugt werden. In analoger Weise kann die Lese-Sensorik auch auf der Bluetooth Technologie oder anderen kabellosen Datenübertragungstechnologien basieren. Die Lese-Sensorik kann auch die Funktionalität eines Lesegeräts zum Scannen von Identifikationsmustern, wie beispielsweise Strichcodes, QRcodes usw., bereitstellen und die damit verknüpfte Identifikationsinformation als Umgebungsinformation erzeugen.

Die Erfindung betrifft auch ein System aufweisend ein an eine mittels Plattformsteuerung automatisch geführte Plattform koppelbares erfindungsgemässes Six-DOF-Messhilfsmittel, wobei die Plattform zur Ausführung sich wiederholender Messaufgaben entlang eines zumindest grob vordefinierten Pfades in einer Umgebung automatisch geführt wird, und eine Anomaliedetektionseinheit, die kommunikativ mit dem Steuerungsmodul des Six-DOF-Messhilfsmittels verbindbar ist, wobei im Rahmen der Plattformsteuerungsunterstützungsfunktionalität von der Umgebungssensorik erzeugte Umgebungsinformation durch das Steuerungsmodul der Anomaliedetektionseinheit bereitgestellt wird, und die Anomaliedetektionseinheit dazu konfiguriert ist in einem ersten Modus, basierend auf Umgebungsinformation eine Referenzumgebung in welcher das Six-DOF-Messhilfsmittel automatisch geführt wird als Umgebungsnormal zu erzeugen, in einem zweiten Modus, basierend auf Umgebungsinformation Anomalien zum Umgebungsnormal zu detektieren, und basierend auf detektierten Anomalien die Plattformsteuerung anzuweisen die Führung der Plattform anzupassen.

Die Anomaliedetektionseinheit weist dabei typischerweise einen Prozessor, einen Speicher und eine Kommunikationsschnittstelle auf. Dies ermöglicht den Erhalt von erzeugter Umgebungsinformation, deren Abspeicherung und deren Prozessierung, um, beispielsweise mittels Abgleich von im zweiten Modus erzeugter Umgebungsinformation mit dem Umgebungsnormal, Anomalien zu detektieren und basierend darauf die Plattformsteuerung steuerungsunterstützend anzuweisen die Führung der Plattform anzupassen.

Die von dem Steuerungsmodul bereitgestellte Umgebungsinformation zur Bestimmung eines Umgebungsnormals kann auch von der Anomaliedetektionseinheit abgespeichert werden, bzw. kann das bestimmte Umgebungsnormal abgespeichert werden, sodass von der Umgebungssensorik erzeugte Umgebungsinformation mit gespeicherten Umgebungsnormalen abgeglichen werden kann und basierend auf dem Abgleichen ein Umgebungsnormal erkannt wird und basierend darauf die Plattformsteuerung angewiesen wird die Führung der Plattform anzupassen. Somit kann die Anzahl an "Teaching"-Vorgängen reduziert werden.

Die Erkennung oder Identifizierung eines Umgebungsnormals und dessen Verwendung zum Anweisen der Plattformsteuerung die automatische Führung der Plattform anzupassen kann mittels am zu vermessenden Objekt angebrachter Identifikationsmarken/-mustern und der Umgebungssensorik erfolgen, beispielsweise basierend auf der Nutzung von NFC-Technologie und/oder von Bluetooth Technologie oder von optischer Barcode und/oder QR-code Scanner-Technologie. Dabei würde basierend auf der Erkennung mittels Umgebungssensorik beispielsweise eines NFC-Tags oder Radio-Frequency-Identification RFID-Tags am zu vermessenden Objekt das entsprechend hinterlegte Umgebungsnormal verwendet zur Anweisung der Plattformsteuerung die Führung der Plattform anzupassen.

Gemäss einer Ausführungsform weist die Umgebungsinformation mindestens eine Information aus der Gruppe von Informationen aufweisend Abstandsinformation, Bilddaten, Beschleunigungsinformation, und Temperaturinformation, auf. Dabei ist die Anomaliedetektionseinheit dazu konfiguriert Umgebungsinformation einem Punkt des Pfades an dem sich das Six-DOF-Messhilfsmittel zum Zeitpunkt der Erzeugung der Umgebungsinformation befindet zuzuordnen, und Anomalien zu detektieren basierend auf einem Abgleich von Umgebungsinformation eines Punktes des Pfades mit dem Umgebungsnormal des Punktes.

Die Gruppe von Informationen kann auch absolute Positionsinformation, beispielsweise von GPS-Sensoren und/oder barometrischen Sensoren usw. aufweisen.

Dadurch wird es beispielsweise ermöglicht, dass bei einer objekt-/bauteilspezifischen Vermessungsaufgabe im Rahmen des "Teaching"-Vorgangs das Six-DOF-Messhilfsmittel entlang eines zumindest grob vordefinierten Pfades zu den zu vermessenden Objektpunkten bzw. Bereichen geführt wird und währenddessen beispielsweise Abstandsinformation, Bilddaten, Beschleunigungsinformation und Temperaturinformation erzeugt werden und die so erzeugte Umgebungsinformation dann von der Anomaliedetektionseinheit Punkten des Pfades an denen die Umgebungsinformation erzeugt wurde zugeordnet wird und basierend darauf im ersten Modus ein Umgebungsnormal bestimmt wird. Die Führung entlang des Pfades kann auch wiederholt werden, um beispielsweise das Umgebungsnormal basierend auf gemittelter Umgebungsinformation zu bestimmen. Dann wird Umgebungsinformation, welche im Rahmen der Durchführung derselben Vermessungsaufgabe unter Realbedingungen erzeugt wurde, durch die Anomaliedetektionseinheit im zweiten Modus ebenfalls Punkten des Pfades zugeordnet an denen die Umgebungsinformation erzeugt wurde, wobei dann die Detektion von Anomalien auf einem Abgleich von im zweiten Modus erzeugter Umgebungsinformation mit Umgebungsinformation des Umgebungsnormals erfolgt, wobei die Umgebungsinformationen an sich entsprechenden Punkten erzeugt wurden. Dabei müssen die sich entsprechenden Punkte nicht zwingend dieselben Punkte sein, sondern können sich basierend auf einem bestimmten Kriterium entsprechen.

Gemäss einer Ausführungsform ist die Anomaliedetektionseinheit dazu konfiguriert, in einem dritten Modus basierend auf Umgebungsinformation einen Abstand zu einem Objekt mit zu vermessenden Objektpunkten zu bestimmen und basierend darauf die Plattformsteuerung dazu anzuweisen die Führung der Plattform so anzupassen, dass ein definierter Abstand zum Objekt eingehalten wird.

Gemäss einer Ausführungsform weist das System einen Lasertracker mit einer Positions- und Orientierungsbestimmungsfunktionalität zur Bestimmung einer Position und Orientierung des Six-DOF-Messhilfsmittels auf.

Gemäss einer Ausführungsform ist der Lasertracker dazu konfiguriert, basierend auf dem von den visuellen Markierungen gebildeten Muster, und mittels des Reflektors, 3D-Koordinaten der Objektpunkte in Form von 3D-Punkten einer Punktwolke zu bestimmen.

Gemäss einer Ausführungsform weist das System einen mobil bewegten optischen Scanner als Six-DOF-Messhilfsmittel auf wobei der Lasertracker dazu konfiguriert ist basierend auf der optische Strahlung basierten Abtastung von Objektpunkten 3D-Koordinaten der Objektpunkte in Form von 3D-Punkten einer Punktwolke zu bestimmen.

Die Erfindung betrifft auch ein System zur Nachrüstung von Six-DOF-Messmittelmodulen, sodass ein erfindungsgemässes Six-DOF-Messhilfsmittel bereitgestellt wird. Das System weist auf eine Umgebungssensorik zur Erzeugung von Umgebungsinformation, und ein Steuerungsmodul, das kommunikativ mit der Umgebungssensorik und einer Plattformsteuerung verbindbar ist, wobei die Plattformsteuerung dazu konfiguriert ist eine Plattform zur Ausführung sich wiederholender Messaufgaben entlang eines zumindest grob vordefinierten Pfades in einer Umgebung automatisch zu führen, wobei die Umgebungssensorik dazu ausgelegt ist abnehmbar am Six-DOF-Messhilfsmittel angebracht zu werden, und das Steuerungsmodul eine Plattformsteuerungsunterstützungsfunktionalität aufweist, im Rahmen derer das Steuerungsmodul dazu konfiguriert ist die Umgebungssensorik bei der automatisch geführten Bewegung entlang des vordefinierten Pfades, anzuweisen in einem ersten Modus, Umgebungsinformation zur Bestimmung eines Umgebungsnormals, und in einem zweiten Modus, Umgebungsinformation zur Detektion von Anomalien zum Umgebungsnormal zu erzeugen, und die von der Umgebungssensorik erzeugte Umgebungsinformation zur Steuerungsunterstützung der Plattformsteuerung bereitzustellen.

Dabei können beispielsweise einzelne Sensorelemente der Umgebungssensorik am Six-DOF-Messhilfsmittel in einer relativ zueinander bestimmten Positionsrelation angebracht werden. Das Anbringen kann beispielsweise über eine haftvermittelnde Schicht erfolgen die ein jeweiliges Sensorelement aufweist, wobei die haftvermittelnde Schicht eine lösbare Verbindung zwischen Sensorelement und Six-DOF-Messhilfsmittel ermöglicht. Alternativ können die Sensorelemente der Umgebungssensorik beispielsweise auch an einer flexiblen Trageeinheit angebracht sein, wobei die Trageeinheit dazu ausgelegt ist vom Six-DOF-Messhilfsmittel getragen zu werden, d.h. dem Six-DOF-Messhilfsmittel angelegt zu werden, sodass die Sensorelemente am Six-DOF-Messhilfsmittel eine fixe und definierte relative Positionsrelation zueinander aufweisen.

Gemäss einer Ausführungsform ist das Steuerungsmodul dazu konfiguriert in einem dritten Modus Umgebungsinformation zur Einhaltung eines definierten Abstandes zu einem Objekt mit zu vermessenden Objektpunkten zu erzeugen.

### -KURZE BESCHREIBUNG DER FIGUREN-

Das erfindungsgemässe Six-DOF-Messhilfsmittel wird nachfolgend anhand von in den Figuren schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: eine Ausführungsform des Six-DOF-Messhilfsmittels mit einer Kopplungsvorrichtung, visuellen Markierungen und einem Reflektor;
- Figur 2: eine Ausführungsform des an eine automatisch geführte Plattform koppelbaren Six-DOF-Messhilfsmittels ausgebildet als optischer Scanner;
- Figur 3: eine Ausführungsform des an eine automatisch geführte Plattform gekoppelten Six-DOF-Messhilfsmittels gekoppelt mit einem optischen Scanner und einem Taster zur Vermessung von Punkten einer Objektoberfläche;
- Figur 4: eine Ausführungsform des Six-DOF-Messhilfsmittels gekoppelt mit einem optischen Scanner, einem Taster und einem Haltegriff;
- Figur 5: eine Ausführungsform des Six-DOF-Messhilfsmittels ausgebildet als optischer Scanner gekoppelt an eine automatisch geführte Plattform;
- Figur 6: eine Ausführungsform des Six-DOF- Messhilfsmittels ausgebildet als optischer Scanner mit Sensorsichtfeldern; und
- Figur 7: ein zu vermessendes Objekt mit einem dem Objekt zugeordneten grob vordefinierten Pfad.

### -DETAILLIERTE BESCHREIBUNG DER ERFINDUNG-

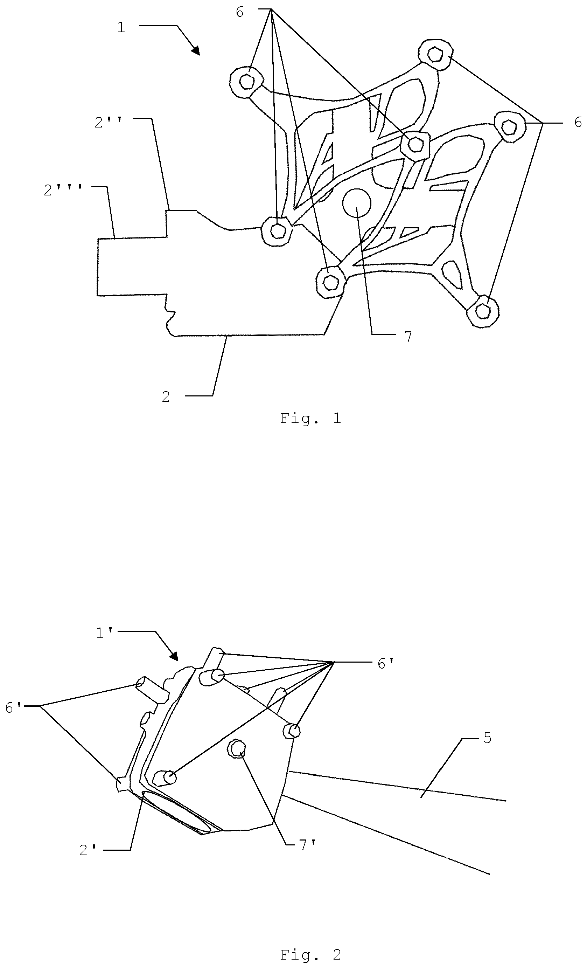

Figur 1 zeigt eine mögliche Ausführungsform des Six-DOF-Messhilfsmittels 1. Dieses weist eine Kopplungsvorrichtung 2 auf, welche ermöglicht alternativ sowohl einen Haltegriff 9 an das Six-DOF-Messhilfsmittel 1 als auch das Six-DOF-Messhilfsmittel 1 an eine automatisch geführte Plattform zu koppeln. Des Weiteren weist das Six-DOF-Messhilfsmittel 1 weitere Kopplungsvorrichtungen 2", 2‴ auf über welche berührungslos messende Messsensoraufbauten wie optische Scanner/Sensoren 10, wie beispielsweise Laserscanner, Weisslichtscanner, und/oder taktil messende Taststifte/Sensoren 10' an das Six-DOF-Messhilfsmittel 1 koppelbar sind. Das Six-DOF-Messhilfsmittel weist visuelle Markierungen 6 die in einem Markierungsbereich angeordnet sind und eine definierte räumliche Beziehung zueinander haben auf. Diesen visuellen Markierungen ist ein Reflektor 7 zugeordnet der am Six-DOF-Messhilfsmittel1angebracht ist.

Figur 2 zeigt eine mögliche Ausführungsform des Six-DOF-Messhilfsmittels in der dieses als optischer Scanner 1' ausgebildet ist. Der optische Scanner dient der Bestimmung von 3D-Koordinaten einer Vielzahl zu vermessender Objektpunkte in Form von 3D-Punkten einer Punktwolke im Zusammenwirken mit einem Lasertracker. Der optische Scanner hat ein optisches Abtastmodul zur optische Strahlung 5 basierten Abtastung von Objektpunkten basierend darauf die Bestimmung von 3D-Punkten erfolgt. Der optische Scanner weist auch mehrere Markierungsbereiche auf in denen jeweils visuelle Markierungen 6' in bestimmter räumlicher Beziehung zueinander angeordnet sind. Die Markierungsbereiche weisen ebenfalls jeweils einen Reflektor 7', der den visuellen Markierungen in dem jeweiligen Markierungsbereich zugeordnet ist, auf. Der optische Scanner hat eine Kopplungsvorrichtung 2' zur Kopplung des optischen Scanners an eine mittels Plattformsteuerung automatisch geführte Plattform 4, 4' und/oder an einen Haltegriff 9.

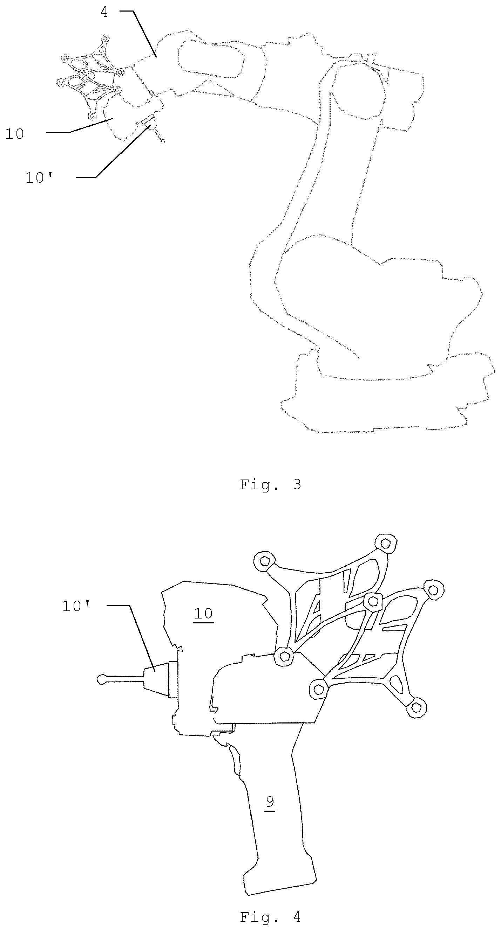

Figur 3 zeigt eine mögliche Ausführungsform des Six-DOF-Messhilfsmittels gekoppelt an eine mittels Plattformsteuerung automatisch geführte Plattform 4. An das Six-DOF-Messhilfsmittel gekoppelt ist ein berührungslos messender optischer Scanner 10 und ein taktil messender Taster 10' zur Vermessung von Punkte einer Objektoberfläche.

Figur 4 zeigt eine mögliche Ausführungsform des Six-DOF-Messhilfsmittels mit gekoppeltem Haltegriff 9.

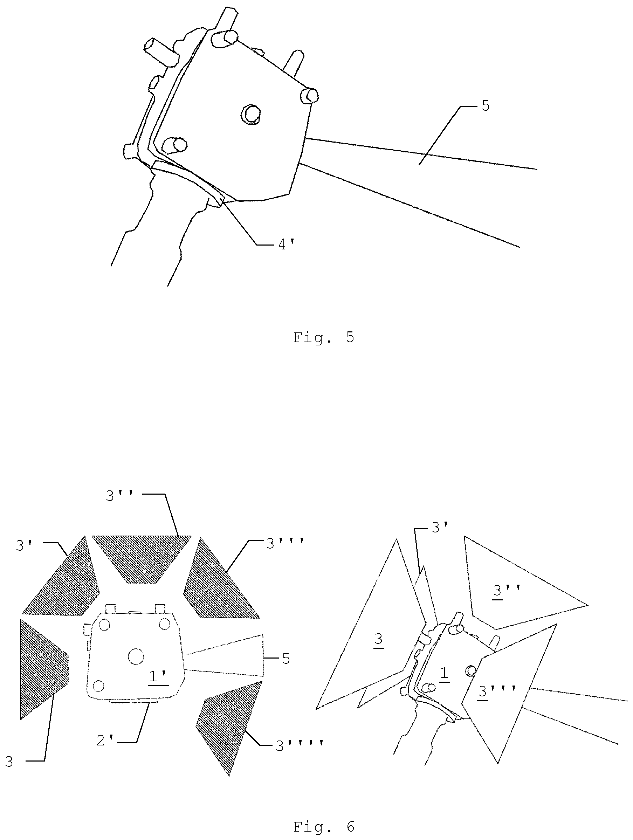

Figur 5 zeigt eine mögliche Ausführungsform des Six-DOF-Messhilfsmittels gekoppelt an eine Plattform 4'.

Figur 6 zeigt eine mögliche Ausführungsform des Six-DOF-Messhilfsmittels aufweisend eine Umgebungssensorik mit einer Vielzahl an Abstandssensoren die jeweils ein Sensorsichtfeld 3, 3', 3", 3"" aufweisen. Die Abstandssensoren sind dabei so am Six-DOF-Messhilfsmittel angeordnet, dass die Sensorsichtfelder sich zu einem das Six-DOF-Messhilfsmittel umgebenden Umgebungssensorsichtfeld ergänzen.

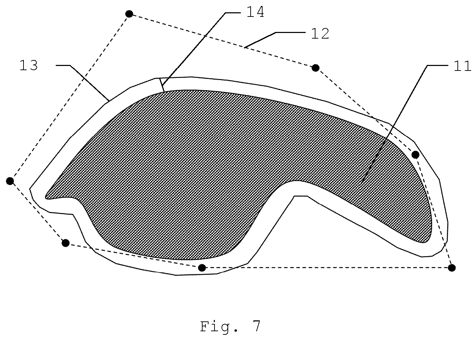

Figur 7 zeigt schematisch ein zu vermessendes Objekt 11 mit einer Oberfläche mit zu vermessenden Punkten. Um das zu vermessende Objekt herum ist auch ein grob vordefinierter Pfad 12 gezeigt. Das an eine automatisch geführte Plattform gekoppelte Six-DOF-Messhilfsmittel wird dabei zur Vermessung des Objekts bzw. der Oberfläche entlang des grob vordefinierten Pfades automatisch geführt, wobei das Steuerungsmodul im Rahmen der Plattformsteuerungsunterstützungsfunktionalität dazu konfiguriert ist, die Umgebungssensorik bei der automatisch geführten Bewegung entlang des vordefinierten Pfades 12, anzuweisen in einem ersten Modus, Umgebungsinformation zur Bestimmung eines Umgebungsnormals, und in einem zweiten Modus, Umgebungsinformation zur Detektion von Anomalien zum Umgebungsnormal zu erzeugen, und die von der Umgebungssensorik erzeugte Umgebungsinformation zur Steuerungsunterstützung der Plattformsteuerung bereitzustellen.

In Figur 7 ist auch ein Pfad 13 gezeigt, der gemäss einer Ausführungsform des Six-DOF-Messhilfsmittels mittels des Steuerungsmoduls bei der automatisch geführten Bewegung entlang des grob vordefinierten Pfades 12 automatisch erzeugbar ist, sodass ein definierter Abstand 14 zu dem Objekt während der automatischen Führung eingehalten wird.

Es versteht sich, dass diese dargestellten Figuren nur mögliche Ausführungsbeispiele schematisch darstellen.

## Patentansprüche

1. Six-DOF-Messhilfsmittel (1, 1') zur Verwendung in einem, einen Lasertracker zur Positions- und Orientierungsbestimmung des Six-DOF-Messhilfsmittels aufweisenden, System zur Bestimmung von 3D-Koordinaten einer Vielzahl zu vermessender Objektpunkte in Form von 3D-Punkten einer Punktwolke, das Six-DOF-Messhilfsmittel aufweisend:
- eine Kopplungsvorrichtung (2, 2') zur Kopplung des Six-DOF-Messhilfsmittels an eine mittels Plattformsteuerung automatisch geführte Plattform (4, 4'), wobei die Plattform (4, 4') zur Ausführung sich wiederholender Messaufgaben entlang eines zumindest grob vordefinierten Pfades (12) in einer Umgebung automatisch geführt wird,
- eine Umgebungssensorik zur Erzeugung von Umgebungsinformation, und
- ein Steuerungsmodul, das kommunikativ mit der Umgebungssensorik verbunden und mit der Plattformsteuerung verbindbar ist,
**dadurch gekennzeichnet, dass**
das Steuerungsmodul eine Plattformsteuerungsunterstützungsfunktionalität aufweist, im Rahmen derer das Steuerungsmodul dazu konfiguriert ist, in an eine automatisch geführte Plattform (4, 4') gekoppeltem Zustand
- die Umgebungssensorik bei der automatisch geführten Bewegung entlang des vordefinierten Pfades anzuweisen,
- in einem ersten Modus Umgebungsinformation zur Bestimmung eines Umgebungsnormals zu erzeugen, und
- in einem zweiten Modus Umgebungsinformation zur Detektion von Anomalien zum Umgebungsnormal zu erzeugen, und
- die von der Umgebungssensorik erzeugte Umgebungsinformation zur Steuerungsunterstützung der Plattformsteuerung bereitzustellen,
wobei
- die Umgebungssensorik mehrere berührungslos messende Abstandssensoren aufweist,
- jeder Abstandssensor ein bestimmtes Sensorsichtfeld (3, 3', 3", 3"") hat,
- die Abstandssensoren am Six-DOF-Messhilfsmittel so angeordnet sind, dass sich die Sensorsichtfelder (3, 3', 3", 3'''') der Abstandssensoren zu einem das Six-DOF-Messhilfsmittel umgebenden Umgebungssensorsichtfeld ergänzen, und
- die Abstandssensoren im Rahmen der Plattformsteuerungsunterstützungsfunktionalität dazu konfiguriert sind, Abstandsinformation zu Abständen zu Oberflächen innerhalb des Umgebungssensorsichtfelds als Umgebungsinformation zu erzeugen,
wobei im Rahmen der Plattformsteuerungsunterstützungsfunktionalität das Steuerungsmodul dazu konfiguriert ist,
- nach Erzeugung einer Abstandsinformation zu einem Abstand, der einen ersten Schwellenwert unterschreitet, die Plattformsteuerung anzuweisen, die Führung der Plattform zu verlangsamen, und
- nach Erzeugung einer Abstandsinformation zu einem Abstand, der einen zweiten Schwellenwert, der kleiner als der erste Schwellenwert ist, unterschreitet, die Plattformsteuerung anzuweisen, die Führung der Plattform zu unterbrechen.

2. Six-DOF-Messhilfsmittel nach Anspruch 1, **dadurch gekennzeichnet, dass**
- am Six-DOF-Messhilfsmittel eine flexible formannehmende Sensorhaut, als Teil der Umgebungssensorik, aufweisend eine Vielzahl von berührungslos messenden Sensorelementen, anliegt, wobei die Sensorelemente eine Annäherung eines Hindernisses an die Sensorhaut näher als ein definierter Schwellenwert erkennen, und
- im Rahmen der Plattformsteuerungsunterstützungsfunktionalität das Steuerungsmodul dazu konfiguriert ist, bei Erkennung einer Annäherung eines Hindernisses an die Sensorhaut näher als der definierte Schwellenwert die Plattformsteuerung anzuweisen, die Führung der Plattform (4, 4') zu verlangsamen und/oder zu unterbrechen.

3. Six-DOF-Messhilfsmittel nach Anspruch 1 oder Anspruch 2, **dadurch gekennzeichnet, dass**
- das Six-DOF-Messhilfsmittel von einem steifen Sensorgehäuse, als Teil der Umgebungssensorik, zumindest teilweise eingefasst wird, wobei das Sensorgehäuse eine mechanische Berührung des Sensorgehäuses erkennt, und
- im Rahmen der Plattformsteuerungsunterstützungsfunktionalität das Steuerungsmodul dazu konfiguriert ist, bei Erkennung einer Berührung mittels des Sensorgehäuses die Plattformsteuerung anzuweisen, die Führung der Plattform (4, 4') zu unterbrechen.

4. Six-DOF-Messhilfsmittel nach einem der Ansprüche 1 bis 3, **dadurch gekennzeichnet, dass**
- die Umgebungssensorik mindestens einen Kamerasensor aufweist, und
- der mindestens eine Kamerasensor im Rahmen der Plattformsteuerungsunterstützungsfunktionalität dazu konfiguriert ist, Bilddaten zur Umgebung des Six-DOF-Messhilfsmittels als Umgebungsinformation zu erzeugen.

5. Six-DOF-Messhilfsmittel nach einem der Ansprüche 1 bis 4, **dadurch gekennzeichnet, dass**
- die Umgebungssensorik mindestens einen Beschleunigungssensor aufweist, und
- der mindestens eine Beschleunigungssensor im Rahmen der Plattformsteuerungsunterstützungsfunktionalität dazu konfiguriert ist, Beschleunigungsinformation zur Bewegung des Six-DOF-Messhilfsmittels in der Umgebung als Umgebungsinformation zu erzeugen.

6. Six-DOF-Messhilfsmittel nach einem der Ansprüche 1 bis 5, **dadurch gekennzeichnet, dass**
- die Umgebungssensorik mindestens einen Temperatursensor aufweist, und
- der mindestens eine Temperatursensor im Rahmen der Plattformsteuerungsunterstützungsfunktionalität dazu konfiguriert ist, Temperaturinformation zur Umgebungstemperatur des Six-DOF-Messhilfsmittels als Umgebungsinformation zu erzeugen.

7. Six-DOF-Messhilfsmittel nach einem der Ansprüche 1 bis 6, **dadurch gekennzeichnet, dass** sich die Erzeugung der Umgebungsinformation im ersten Modus zumindest in der Rate der Informationserzeugung von derjenigen im zweiten Modus unterscheidet.

8. Six-DOF-Messhilfsmittel nach einem der Ansprüche 1 bis 7, **gekennzeichnet durch**
- visuelle Markierungen (6, 6'), die in definierter räumlicher Beziehung ein Muster bildend am Six-DOF-Messhilfsmittel in einem Markierungsbereich angeordnet sind und für einen Lasertracker die Orientierung des Six-DOF-Messhilfsmittels bestimmbar machen, und
- einen Reflektor (7, 7'), der den visuellen Markierungen (6, 6') zugeordnet ist und die Position des Six-DOF-Messhilfsmittels für den Lasertracker bestimmbar macht.

9. Six-DOF-Messhilfsmittel nach Anspruch 8, **dadurch gekennzeichnet, dass** die visuellen Markierungen (6, 6') Lichtpunkte sind, und der Reflektor (7, 7') ein Retroreflektor ist.

10. Six-DOF-Messhilfsmittel nach einem der Ansprüche 1 bis 9, **dadurch gekennzeichnet, dass** das Steuerungsmodul dazu konfiguriert ist, die Umgebungssensorik bei der automatisch geführten Bewegung entlang des vordefinierten Pfades (12) anzuweisen, in einem dritten Modus Umgebungsinformation zur Einhaltung eines definierten Abstandes (14) zu einem Objekt mit zu vermessenden Objektpunkten zu erzeugen.

11. Six-DOF-Messhilfsmittel nach einem der Ansprüche 1 bis 10, **dadurch gekennzeichnet, dass** das Six-DOF-Messhilfsmittel ein mobil bewegter optischer Scanner (1') zur Bestimmung von 3D-Koordinaten einer Vielzahl zu vermessender Objektpunkte in Form von 3D-Punkten einer Punktwolke im Zusammenwirken mit einem Lasertracker, mit einem optischen Abtastmodul zur optische Strahlung (5) basierten Abtastung von Objektpunkten basierend darauf die Bestimmung von 3D-Punkten erfolgt, ist.

12. Six-DOF-Messhilfsmittel nach einem der Ansprüche 1 bis 11, **dadurch gekennzeichnet, dass**
die Umgebungssensorik eine Lese-Sensorik aufweist, die im Rahmen der Plattformsteuerungsunterstützungsfunktionalität dazu konfiguriert ist, eine Identifikationsmarke und/oder ein Identifikationsmuster in der Umgebung des Six-DOF-Messhilfsmittels zu erkennen und der Identifikationsmarke und/oder dem Identifikationsmuster zugeordnete Identifikationsinformation als Umgebungsinformation zu erzeugen.

13. System, aufweisend
- ein an eine mittels Plattformsteuerung automatisch geführte Plattform (4, 4') koppelbares Six-DOF-Messhilfsmittel (1, 1') nach einem der Ansprüche 1 bis 12, wobei die Plattform (4, 4') zur Ausführung sich wiederholender Messaufgaben entlang eines zumindest grob vordefinierten Pfades in einer Umgebung automatisch geführt wird, und
- eine Anomaliedetektionseinheit, die kommunikativ mit dem Steuerungsmodul des Six-DOF-Messhilfsmittels verbindbar ist,
**dadurch gekennzeichnet, dass**
- im Rahmen der Plattformsteuerungsunterstützungsfunktionalität von der Umgebungssensorik erzeugte Umgebungsinformation durch das Steuerungsmodul der Anomaliedetektionseinheit bereitgestellt wird, und
- die Anomaliedetektionseinheit dazu konfiguriert ist,
- in einem ersten Modus basierend auf Umgebungsinformation eine Referenzumgebung, in welcher das Six-DOF-Messhilfsmittel automatisch geführt wird, als Umgebungsnormal zu erzeugen,
- in einem zweiten Modus basierend auf Umgebungsinformation Anomalien zum Umgebungsnormal zu detektieren, und
- basierend auf detektierten Anomalien die Plattformsteuerung anzuweisen, die Führung der Plattform (4, 4') anzupassen.

## Claims

1. Six-DoF measurement aid (1, 1') for use in a system comprising a laser tracker for position and orientation determination of the six-DoF measurement aid for determining 3D coordinates of a multiplicity of object points to be measured in the form of 3D points of a point cloud, having
∘ a coupling device (2, 2') for coupling the six-DoF measurement aid to a platform (4, 4') which is automatically guided by means of a platform control, the platform (4, 4') being automatically guided along an at least approximately predefined path (12) in an environment in order to carry out repeated measuring tasks,
∘ an environment sensor arrangement for generating environmental information, and
∘ a control module which is communicatively connected to the environment sensor arrangement and can be connected to the platform control,
**characterized in that**
the control module comprises a platform control assistance functionality, in the scope of which the control module is configured, in a state coupled to an automatically guided platform (4, 4'),
∘ to instruct the environment sensor arrangement, during the automatically guided movement along the predefined path,
in a first mode to generate environmental information for determining an environmental normal, and
in a second mode to generate environmental information for detecting anomalies with respect to the environmental normal,
and
∘ to provide the environmental information generated by the environment sensor arrangement for control assistance of the platform control,
wherein
v the environment sensor arrangement comprises a plurality of contactlessly measuring distance sensors,
∘ each distance sensor has a particular sensor field of view (3, 3', 3'', 3''''),
∘ the distance sensors are arranged on the six-DoF measurement aid in such a way that the sensor fields of view (3, 3', 3'', 3"") of the distance sensors supplement one another to form an environment sensor field of view surrounding the six-DoF measurement aid, and
∘ the distance sensors are configured in the scope of the platform control assistance functionality to generate distance information relating to distances to surfaces within the environment sensor field of view as environmental information,
wherein in the scope of the platform control assistance functionality, the control module is configured,
∘ after generating distance information for a distance, which falls below a first threshold value, to instruct the platform control to slow the guiding of the platform, and
∘ after generating distance information for a distanc. which falls below a second threshold value which is less than the first threshold value, to instruct the platform control to interrupt the guiding of the platform.

2. Six-DoF measurement aid according to Claim 1, **characterized in that**
∘ a flexible shape-adopting sensor skin as part of the environment sensor arrangement, comprising a multiplicity of contactlessly measuring sensor elements, lies on the six-DoF measurement aid, the sensor elements recognizing an approach of an obstacle to the sensor skin closer than a defined threshold value, and
∘ in the scope of the platform control assistance functionality, the control module is configured, when recognizing an approach of an obstacle to the sensor skin closer than the defined threshold value, to instruct the platform control to slow and/or to interrupt the guiding of the platform (4, 4').

3. Six-DoF measurement aid according to any one of Claims 1 to 2, **characterized in that**
∘ the six-DoF measurement aid is at least partially framed by a rigid sensor housing as part of the environment sensor arrangement, the sensor housing recognizing mechanical contact of the sensor housing, and
∘ in the scope of the platform control assistance functionality, the control module is configured, when recognizing contact by means of the sensor housing, to instruct the platform control to interrupt the guiding of the platform (4, 4').

4. Six-DoF measurement aid according to any one of Claims 1 to 3, **characterized in that**
∘ the environment sensor arrangement comprises at least one camera sensor, and
∘ the at least one camera sensor is configured in the scope of the platform control assistance functionality to generate image data relating to the environment of the six-DoF measurement aid as environmental information.

5. Six-DoF measurement aid according to any one of Claims 1 to 4, **characterized in that**
∘ the environment sensor arrangement comprises at least one acceleration sensor, and
∘ the at least one acceleration sensor is configured in the scope of the platform control assistance functionality to generate acceleration information relating to the movement of the six-DoF measurement aid in the environment as environmental information.

6. Six-DoF measurement aid according to any one of Claims 1 to 5, **characterized in that**
∘ the environment sensor arrangement comprises at least one temperature sensor, and
∘ the at least one temperature sensor is configured in the scope of the platform control assistance functionality to generate temperature information relating to the environmental temperature of the six-DoF measurement aid as environmental information.

7. Six-DoF measurement aid according to any one of Claims 1 to 6, **characterized in that** the generation of the environmental information in the first mode differs at least in the rate of the information generation from that in the second mode.

8. Six-DoF measurement aid according to any one of Claims 1 to 7, **characterized by**
∘ visual markings (6, 6'), which are arranged in a defined spatial relation forming a pattern on the six-DoF measurement aid in a marking region and make the orientation of the six-DoF measurement aid determinable for a laser tracker, and
∘ a reflector (7, 7'), which is assigned to the visual markings (6, 6') and makes the position of the six-DoF measurement aid determinable for the laser tracker.

9. Six-DoF measurement aid according to Claim 8, **characterized in that** the visual markings (6, 6') are light points and the reflector (7, 7') is a retroreflector.

10. Six-DoF measurement aid according to any one of Claims 1 to 9, **characterized in that** the control module is configured to instruct the environment sensor arrangement, during the automatically guided movement along the predefined path (12), in a third mode to generate environmental information for maintaining of a defined distance (14) to an object having object points to be measured.

11. Six-DoF measurement aid according to any one of Claims 1 to 10, **characterized in that** the six-DoF measurement aid is an optical scanner (1') moved in a mobile fashion for determining 3D coordinates of a multiplicity of object points to be measured in the form of 3D points of a point cloud in cooperation with a laser tracker, having an optical sampling module for the optical radiation (5)-based sampling of object points, on the basis of which the determination of 3D points is carried out.

12. Six-DoF measurement aid according to any one of Claims 1 to 11, **characterized in that**
∘ the environment sensor arrangement comprises a reading sensor arrangement which, in the scope of the platform control assistance functionality, is configured to recognize an identification mark and/or an identification pattern in the environment of the six-DoF measurement aid and to generate identification information, assigned to the identification mark and/or the identification pattern, as environmental information.

13. System, comprising
∘ a six-DoF measurement aid (1, 1') according to any one of Claims 1 to 12, which can be coupled to a platform (4, 4') automatically guided by means of a platform control, the platform (4, 4') being automatically guided along an at least approximately predefined path in an environment in order to carry out repeated measuring tasks, and
∘ an anomaly detection unit, which can be communicatively connected to the control module of the six-DoF measurement aid,
**characterized in that**
∘ environmental information generated in the scope of the platform control assistance functionality by the environment sensor arrangement is provided by the control module of the anomaly detection unit, and
∘ the anomaly detection unit is configured
in a first mode, on the basis of environmental information, to generate a reference environment in which the six-DoF measurement aid is automatically guided as an environmental normal,
in a second mode to detect anomalies with respect to the environmental normal on the basis of environmental information, and
to instruct the platform control to adapt the guiding of the platform (4, 4') on the basis of detected anomalies.

## Revendications

1. Dispositif d'aide à la mesure six-DDL (1, 1') destiné à être utilisé dans un système comprenant un dispositif de poursuite laser pour une détermination de position et d'orientation du dispositif d'aide à la mesure six-DDL afin de déterminer des coordonnées 3D d'une multiplicité de points d'objets à mesurer sous la forme de points 3D d'un nuage de points, le dispositif d'aide à la mesure six-DDL comportant
∘ un dispositif de couplage (2, 2') pour coupler le dispositif d'aide à la mesure six-DDL à une plate-forme (4, 4') qui est automatiquement guidée au moyen d'une commande de plate-forme, la plate-forme (4, 4') étant automatiquement guidée le long d'un trajet (12) au moins approximativement prédéfini dans un environnement afin d'effectuer des tâches de mesure répétées,
∘ un agencement de capteurs d'environnement pour générer des informations environnementales, et
∘ un module de commande qui est relié en communication à l'agencement de capteurs d'environnement et peut être relié à la commande de plate-forme,
**caractérisé en ce que**
le module de commande comprend une fonctionnalité d'assistance de commande de plate-forme, dans la portée de laquelle le module de commande est configuré, dans un état couplé à une plate-forme guidée automatiquement (4, 4'),
∘ pour ordonner à l'agencement de capteurs d'environnement, pendant le mouvement guidé automatiquement le long du trajet prédéfini,
i. dans un premier mode, de générer des informations environnementales pour déterminer une normale environnementale, et
ii. dans un deuxième mode, de générer des informations environnementales pour détecter des anomalies par rapport à la normale environnementale,
et
∘ pour fournir les informations environnementales générées par l'agencement de capteurs d'environnement pour une assistance de commande de la commande de plate-forme,
∘ l'agencement de capteurs d'environnement comprend une pluralité de capteurs de distance mesurant sans contact,
∘ chaque capteur de distance a un champ de vision de capteur particulier (3, 3', 3", 3ʺʺ),
∘ les capteurs de distance sont agencés sur le dispositif d'aide à la mesure six-DDL de manière à ce que les champs de vision de capteur (3, 3', 3", 3ʺʺ) des capteurs de distance se complètent pour former un champ de vision de capteur d'environnement entourant le dispositif d'aide à la mesure six-DDL, et
∘ les capteurs de distance sont configurés dans la portée de la fonctionnalité d'assistance de commande de plate-forme pour générer des informations de distance relatives à des distances par rapport aux surfaces au sein du champ de vision de capteur d'environnement en tant qu'informations environnementales,
le module de commande est configuré, dans la portée de la fonctionnalité d'assistance de commande de plate-forme,
∘ après génération des informations de distance pour une distance qui tombe en dessous d'une première valeur seuil, pour ordonner à la commande de plate-forme de ralentir le guidage de la plate-forme, et
o après génération des informations de distance pour une distance qui tombe en dessous d'une deuxième valeur seuil qui est inférieure à la première valeur seuil, pour ordonner à la commande de plate-forme d'interrompre le guidage de la plate-forme.

2. Dispositif d'aide à la mesure six-DDL selon la revendication 1, **caractérisé en ce que**
∘ une peau de capteur à conformation flexible faisant partie de l'agencement de capteurs d'environnement, comprenant une multiplicité d'éléments de capteur mesurant sans contact, se trouve sur le dispositif d'aide à la mesure six-DDL, les éléments de capteur reconnaissant une approche d'un obstacle vers la peau de capteur plus proche qu'une valeur seuil définie, et
∘ dans la portée de la fonctionnalité d'assistance de commande de plate-forme, le module de commande est configuré, lors de la reconnaissance d'une approche d'un obstacle vers la peau de capteur plus proche que la valeur seuil définie, pour ordonner à la commande de plate-forme de ralentir et/ou d'interrompre le guidage de la plate-forme (4, 4').

3. Dispositif d'aide à la mesure six-DDL selon la revendication 1 ou 2, **caractérisé en ce que**
∘ le dispositif d'aide à la mesure six-DDL est au moins partiellement encadré par un logement de capteur rigide en tant que partie du dispositif de capteur d'environnement, le logement de capteur reconnaissant un contact mécanique du logement de capteur, et
∘ dans la portée de la fonctionnalité d'assistance de commande de plate-forme, le module de commande est configuré, lors de la reconnaissance d'un contact au moyen du logement du capteur, pour ordonner à la commande de plate-forme d'interrompre le guidage de la plate-forme (4, 4').

4. Dispositif d'aide à la mesure six-DDL selon l'une quelconque des revendications 1 à 3, **caractérisé en ce que**
∘ l'agencement de capteurs d'environnement comprend au moins un capteur de caméra, et
∘ l'au moins un capteur de caméra est configuré dans la portée de la fonctionnalité d'assistance de commande de plate-forme pour générer des données d'image relatives à l'environnement du dispositif d'aide à la mesure six-DDL en tant qu'informations environnementales.

5. Dispositif d'aide à la mesure six-DDL selon l'une quelconque des revendications 1 à 4, **caractérisé en ce que**
∘ l'agencement de capteurs d'environnement comprend au moins un capteur d'accélération, et
∘ l'au moins un capteur d'accélération est configuré dans la portée de la fonctionnalité d'assistance de commande de plate-forme pour générer des informations d'accélération relatives au mouvement du dispositif d'aide à la mesure six-DDL dans l'environnement en tant qu'informations environnementales.

6. Dispositif d'aide à la mesure six-DDL selon l'une quelconque des revendications 1 à 5, **caractérisé en ce que**
∘ l'agencement de capteurs d'environnement comprend au moins un capteur de température, et
∘ l'au moins un capteur de température est configuré dans la portée de la fonctionnalité d'assistance de commande de plate-forme pour générer des informations de température relatives à la température environnementale du dispositif d'aide à la mesure six-DDL en tant qu'informations environnementales.

7. Dispositif d'aide à la mesure six-DDL selon l'une quelconque des revendications 1 à 6, **caractérisé en ce que** la génération des informations environnementales dans le premier mode diffère au moins par le taux de la génération d'informations de celle dans le second mode.

8. Dispositif d'aide à la mesure six-DDL selon l'une quelconque des revendications 1 à 7, **caractérisé en ce que** le dispositif d'aide à la mesure six-DDL comprend
∘ des marquages visuels (6, 6'), qui sont agencés dans une relation spatiale définie formant un motif sur le dispositif d'aide à la mesure six-DDL dans une région de marquage et qui rendent l'orientation du dispositif d'aide à la mesure six-DDL déterminable pour un dispositif de poursuite laser, et
∘ un réflecteur (7, 7'), qui est assigné aux marquages visuels (6, 6') et qui rend la position du dispositif d'aide à la mesure six-DDL déterminable pour le dispositif de poursuite laser.

9. Dispositif d'aide à la mesure six-DDL selon la revendication 8, **caractérisé en ce que** les marquages visuels (6, 6') sont des points lumineux et le réflecteur (7, 7') est un rétroréflecteur.

10. Dispositif d'aide à la mesure six-DDL selon l'une quelconque des revendications 1 à 9, **caractérisé en ce que** le module de commande est configuré pour ordonner à l'agencement de capteurs d'environnement, pendant le mouvement guidé automatiquement le long du trajet prédéfini (12), dans un troisième mode de générer des informations environnementales pour le maintien d'une distance définie (14) à un objet ayant des points d'objet à mesurer.

11. Dispositif d'aide à la mesure six-DDL selon l'une quelconque des revendications 1 à 10, **caractérisé en ce que** le dispositif d'aide à la mesure six-DDL est un dispositif de balayage optique (1') déplacé de manière mobile pour déterminer des coordonnées 3D d'une multiplicité de points d'objets à mesurer sous la forme de points 3D d'un nuage de points en coopération avec un dispositif de poursuite laser, ayant un module d'échantillonnage optique pour l'échantillonnage des points d'objets basé sur un rayonnement optique (5), sur la base duquel la détermination des points 3D est effectuée.

12. Dispositif d'aide à la mesure six-DDL selon l'une quelconque des revendications 1 à 11, **caractérisé en ce que**
∘ l'agencement de capteurs d'environnement comprend un agencement de capteurs de lecture qui, dans la portée de la fonctionnalité d'assistance de commande de plate-forme, est configuré pour reconnaître une marque d'identification et/ou un motif d'identification dans l'environnement du dispositif d'aide à la mesure six-DDL et pour générer des informations d'identification, assignées à la marque d'identification et/ou au motif d'identification, en tant qu'informations environnementales.

13. Système comprenant
∘ un dispositif d'aide à la mesure six-DDL (1, 1') selon l'une quelconque des revendications 1 à 12, qui peut être couplé à une plate-forme (4, 4') guidée automatiquement au moyen d'une commande de plate-forme, la plate-forme (4, 4') étant guidée automatiquement le long d'un trajet au moins approximativement prédéfini dans un environnement afin d'effectuer des tâches de mesure répétées, et
∘ une unité de détection d'anomalies, qui peut être reliée en communication au module de commande du dispositif d'aide à la mesure six-DDL,
**caractérisé en ce que**
∘ des informations environnementales générées dans la portée de la fonctionnalité d'assistance de commande de plate-forme par l'agencement de capteurs d'environnement sont fournies par le module de commande de l'unité de détection d'anomalies, et
∘ l'unité de détection d'anomalies est configurée
i. dans un premier mode, sur la base d'informations environnementales, pour générer un environnement de référence dans lequel le dispositif d'aide à la mesure six-DDL est automatiquement guidé en tant que normale environnementale,
ii. dans un deuxième mode, pour détecter des anomalies par rapport à la normale environnementale sur la base d'informations environnementales, et
iii. pour ordonner à la commande de plate-forme d'adapter le guidage de la plate-forme (4, 4') sur la base des anomalies détectées.
